(19) Europäisches Patentamt
European Patent Office
Office européen des brevets

(11) **EP 3 040 436 B1**

(12) **EUROPEAN PATENT SPECIFICATION**

(45) Date of publication and mention
of the grant of the patent:
**18.04.2018 Bulletin 2018/16**

(21) Application number: **14840332.2**

(22) Date of filing: **21.08.2014**

(51) Int Cl.:
*C22C 38/00* [(2006.01)]    *B21B 1/38* [(2006.01)]
*C21D 8/02* [(2006.01)]    *C22C 38/58* [(2006.01)]

(86) International application number:
**PCT/JP2014/071894**

(87) International publication number:
**WO 2015/029873 (05.03.2015 Gazette 2015/09)**

(54) **THICK STEEL SHEET HAVING EXCELLENT FATIGUE PROPERTIES, AND METHOD FOR PRODUCING SAME**

DICKES STAHLBLECH MIT HERVORRAGENDEN ERMÜDUNGSEIGENSCHAFTEN UND VERFAHREN ZUR HERSTELLUNG DAVON

TÔLE D'ACIER ÉPAISSE AYANT D'EXCELLENTES PROPRIÉTÉS À LA FATIGUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2013 JP 2013175024
04.03.2014 JP 2014041920**

(43) Date of publication of application:
**06.07.2016 Bulletin 2016/27**

(73) Proprietor: **Kabushiki Kaisha Kobe Seiko Sho
(Kobe Steel, Ltd.)
Kobe-shi, Hyogo 651-8585 (JP)**

(72) Inventors:
• **SANDAIJI Yusuke
Hyogo 651-2271 (JP)**

• **KINEFUCHI, Masao
Hyogo 651-2271 (JP)**
• **KAWANO, Haruya
Hyogo 675-0137 (JP)**
• **KANEKO Masahito
Hyogo 675-0137 (JP)**

(74) Representative: **Müller-Boré & Partner
Patentanwälte PartG mbB
Friedenheimer Brücke 21
80639 München (DE)**

(56) References cited:
**EP-A1- 2 617 850        WO-A1-2005/098069
WO-A1-2007/072752        WO-A1-2009/133965
JP-A- 2001 316 756        JP-A- 2002 241 891
JP-A- 2003 239 036        JP-A- 2005 350 691
JP-A- 2007 162 076        JP-A- 2010 209 433**

**Description**

Technical Field

The present invention relates to a thick steel sheet used as structural materials mainly for ships, buildings, bridges, construction machines, etc., as well as a method for producing the same. More specifically, the invention relates to a thick steel sheet having a tensile strength of 490 MPa or more and 650 MPa or less and excellent in fatigue properties, and a method for producing the same.

Background Art

In large size structures such as ships, buildings, bridges and construction machines, the size of the structure has been increased and reliability has been demanded more for the structural material considering the great damages if they should be destroyed. It has been known so far that most of causes for destruction in large size structures are fatigue failure, and various fatigue failure resistant techniques have been developed, but there are not a few cases of suffering from failure owing to fatigue failure still at present.

Generally, in a portion of a large structure liable to undergo fatigue failure, stress concentration has been moderated by adopting a structural device. However, because of addition of members and use of high strength steel in such a structure often increases the production cost. Accordingly, it has been demanded a technique of improving fatigue properties of the steel per se.

For example, Non-Patent Literature 1 discloses effects of various influence factors on fatigue properties and describes that while the fatigue properties are improved by solid-solution strengthening, precipitation strengthening, crystal grain refinement, and second phase strengthening, improvement of the fatigue properties are less obtained by dislocation strengthening because this accompanies increase of mobile dislocations. The process of fatigue failure can be divided into (1) a process till generation of cracks due to repetitive application of loads and (2) a growing process of generated cracks to reach rupture. Among the factors of improving the fatigue properties shown before, it is effective to suppress accumulation of dislocations in the process (1) and it is considered that the solid-solution strengthening, precipitation strengthening, crystal grain refinement, etc. are effective. On the other hand, since inhibition of the growth of the cracks is effective in the process (2), it is considered that the crystal grain refinement and the second phase strengthening are effective.

On the other hand, Patent Literature 1 proposes a dual phase microstructure of fine ferrite and hard martensite in which the crack growth rate is suppressed by defining the hardness difference therebetween to improve the fatigue life after generation of cracks. However, in this technique, since a great amount of dislocations are introduced by a quenching treatment and, in addition, dislocations are further introduced when the second phase transforms from austenite to martensite and it is easily considered that the life to the generation of cracks is lowered and it is difficult to stably improve the total life. Further, while precipitations of carbonitrides is expected by addition of Nb or V, when rapid cooling is performed as in the quenching treatment, it is difficult to stably ensure such precipitates and attain the improvement of fatigue properties by precipitation strengthening.

Patent Literature 2 proposes a technique of lowering the crack growth rate by transforming a steel microstructure to a mixed structure of fine ferrite and bainite. By using the technique, improvement of the fatigue life after generation of cracks may be expected also in the fatigue failure, but fatigue properties up to generation of cracks are not considered at all and no remarkable improvement of the fatigue properties can be expected.

Patent Literature 3 proposes to improve the fatigue strength by precipitation of carbides in the ferrite structure. However, it does not describe the fatigue properties after the generation of the cracks and, in addition, the target is a thin steel sheet, so that it is difficult to satisfy other properties such as toughness necessary for large structures.

The present inventors have investigated the total life up to the fatigue failure for the ratio between the life to the generation of cracks and the life to the rupture after the generation of the cracks. As a result, it has been found that life to the generation of the cracks occupies about 50% for the total life up to the fatigue failure and the proportion of the life to the generation of the cracks increased as the total life is lengthened by lowering the stress level. In view of the foregoings, in order to extend the total life to the fatigue failure, it is necessary to improve the fatigue properties up to the generation of the cracks as well as fatigue properties after the generation of the cracks. Particularly, the proportion of the life to generation of the cracks tends to be increased near the fatigue limit.

As has been described above, a technique of improving the fatigue properties is required for the large structures and, in addition, a technique of lowering the crack growing speed (technique of improving the crack growing property) is also required. This is because the damaged portion can be found and repaired before reaching the fracture if the crack growing speed is low even when fatigue crack is generated. Accordingly, it has been demanded for a steel sheet capable of improving the fatigue properties (fatigue strength) of steel per se and also improving the fatigue cracking growing property (lowering the growing speed of fatigue cracks).

Growth of the cracks in the fatigue properties described above occurs particularly in a region where the crack length is short just after the generation of the cracks and, accordingly, evaluation has to be made for a test specimen sampled from the surface layer. On the other hand, crack growth in the crack growth properties occurs in a region where cracks grow stably (so-called long crack), which undergoes the effect of the steel microstructure not in the surface layer but in the inside of the steel. Accordingly, in order to produce a steel sheet also excellent in the crack growth properties in addition to the fatigue properties, it is necessary to control not only the form of the microstructure in the surface layer but also the form of the microstructure inside the steel. WO 2009/ 133965 discloses a hot rolled steel plate for steel tubes and structural purposes which is excellent in fatigue characteristics and bending formability.

Citation List

Non-Patent Literature

Non-Patent Literature 1: Abe, et al. "Iron and Steel", 70th year (1984), No. 10, 1459 to 1466

Patent Literature

Patent Literature 1: Japanese Unexamined Patent Application Publication No. H10-60575
Patent Literature 2: Japanese Unexamined Patent Application Publication No. 2011-195944
Patent Literature 3: Japanese Unexamined Patent Application Publication No. 2009-84643

Summary of Invention

Technical Problem

The present invention has been accomplished in view of the foregoing situations and intends to provide a thick steel sheet of excellent fatigue properties not found so far by improving both the fatigue properties up to generation of cracks and fatigue properties after the generation of the cracks, as well as a method useful for producing such a thick steel sheet.

Solution to Problem

A thick steel sheet of the present invention capable of solving the subject provides a thick steel sheet comprising, by mass%, 0.010 to 0.1% of C, more than 0% and 0.3% or less of Si, 1.0 to 2% of Mn, 0.5 to 2% of Cr, 0.005 to 1.5% of Mo, and 0.0005 to 0.005% of B, respectively, and comprising one or more elements selected from 0.1 to 1.0% of Cu, and 0.1 to 1.0% of Ni, and one or more element selected from the group consisting of 0.05% or less of V, 0.05% or less of Nb, and 0.05% or less of Ti, in which the elements satisfy the relation of the following formulas (1) to (3), and the remainder consisting of iron and inevitable impurities, in which
the micro structure satisfies the following requirements (a) to (d) when measured at an observation position at a depth of 3 mm from the surface of a steel sheet along a vertical cross section parallel to a rolling direction, and precipitates satisfy the following requirement (A):

$$0.01 \leq [\mathrm{Nb}] + 2[\mathrm{Ti}] + 2[\mathrm{V}] \leq 0.10 \quad \cdots\cdots (1)$$

(where [Nb], [Ti], and [V] represent respectively the contents of Nb, Ti and V in the steel sheet on the mass% base),

$$0 \leq ([\mathrm{Cu}] + [\mathrm{Ni}]) \cdot 2[\mathrm{Si}] \leq 1.0 \quad \cdots\cdots (2)$$

(where [Cu], [Ni] and [Si] represent respectively the contents of Cu, Ni, and Si in the steel sheet on the mass% base), and

$$2.4 \leq [\mathrm{Mn}] + 1.5[\mathrm{Cr}] + 2[\mathrm{Mo}] \leq 4.5 \quad \cdots\cdots (3)$$

(where [Mn], [Cr] and [Mo] represent respectively the contents of Mn, Cr, and Mo respectively in the steel sheet on the mass% base),

(a) the micro structure comprises a bainitic structure and a remaining microstructure harder than the bainite where the bainitic fraction is 80 area% or more in the whole microstructure,
(b) when the crystal grain size of the bainite is determined based on a high-angle grain boundary having an orientation difference between adjacent crystals of 15° or greater, the average length of the crystal grains in the direction of the sheet thickness is 7 $\mu$m or less,
(c) a circle equivalent diameter of a harder remaining microstructure is 3 $\mu$m or less, and
(d) a difference of hardness between the bainite and the harder remaining microstructure (hardness of the harder remaining microstructure - hardness of the bainite) is Hv 100 or more, and

(A) the number of precipitates containing at least one of Nb, Ti, and V each having a circle equivalent diameter of 20 nm or less is 100 N/$\mu$m$^2$ or more.

"Circle equivalent diameter" described above means a diameter when converted into a circle of an identical area (circle equivalent diameter).

In the thick steel sheet of the present invention, it is also useful to further incorporate optionally (i) more than 0% and 0.005% or less of Ca, (ii) more than 0% and 0.10% or less of Al, and (iii) more than 0% and 0.010% or less of N, etc. in which the properties of the thick steel sheet are further improved depending on the kind of the elements to be incorporated.

Further, as a result of crack growth test and microstructure observation on various steel sheets, the present inventors have found that a steel sheet also excellent in crack growth properties in addition to the fatigue properties can be obtained by controlling the microstructural form at 1/4 position of the sheet thickness (also referred to as t/4 position).

(e) The micro structure comprises a bainitic structure and a remaining microstructure harder than the bainite in which the bainitic fraction in the total microstructure is 80 area% or more.
(f) the average length of the crystal grains in the direction of the thickness is 7 $\mu$m or less when crystal grain of the bainite is determined on the basis of a high-angle grain boundary having the orientation difference between adjacent crystals of 15° or larger.
(g) The circle equivalent diameter of the harder remaining microstructure is 3 $\mu$m or less.

On the other hand, a production method according to the present invention capable of attaining the purpose described above is characterized by hot rolling a slab of the chemical composition as described above under the following conditions. In the method, the cooling stop temperature is preferably 450°C or lower.

Heating temperature: 1000 to 1200°C
Cumulative draft during total hot rolling step: 70% or more
Cumulative draft during finish rolling defined within a range of Ar$_3$ transformation point + 100°C to Ar$_3$ transformation point: 30% or more
Average cooling rate from finish rolling completion to 600°C is: 10°C/sec or lower.

Advantageous Effects of Invention

According to the present invention, since the microstructure and precipitates are properly controlled together with the chemical composition in the thick steel sheet, both of fatigue properties up to the generation of cracks (crack generation suppressing property) and fatigue property after the generation of cracks (crack growth suppression property) can be improved to achieve a thick steel sheet of excellent fatigue properties.

Brief Description of Drawings

[Fig. 1] is a schematic explanatory view illustrating a test specimen used for measurement of fatigue properties.
[Fig. 2] is a schematic explanatory view illustrating the shape of a compact test specimen used for measurement of crack growth rate.

Description of Embodiments

First, the present inventors have investigated means for ensuring the fatigue life after generation of fatigue cracks. As has been described above, since the growth of cracks greatly contributes to the fatigue life after the generation of the cracks, strengthening by the refinement of crystal grains and by the harder remaining microstructure (second phase) in the main microstructure are effective. Among them, for the refinement of the crystal grains, the crystal grains can be refined by transformation of the microstructure of the steel into the bainitic structure or the martensitic structure. However, since such microstructures contain a lot of dislocations, they may possibly lower the crack generation life greatly. Further, also in a case of utilizing strengthening by the harder second phase, since the crack generation life may be possibly lowered, and, in addition, the toughness and the strength may be possibly lowered greatly depending on the size and the fraction thereof, an attention has to be paid upon utilizing the same.

The present inventors have investigated the effects of the microstructural form on the fatigue properties for various thick steel sheets. As a result, it has been found that a thick steel sheet having fatigue properties more excellent than those of the prior art can be obtained by controlling the microstructure along the cross section in the direction of the thickness (vertical cross section parallel to the rolling direction) at a point of 3 mm depth from the surface of the steel sheet as described below. The microstructure at the depth of 3 mm from the surface of the steel sheet is adopted as a target because the microstructure near the surface layer has to be controlled since the cracks are generated at the surface of the steel sheet in usual thick steel sheets, and because the fatigue properties cannot be improved even when the microstructure at t/4 position or t/2 position (t: plate thickness) is controlled.

(Structure)

The bainitic fraction present in the micro structure is ensured by 80 area% or more and the average length of the crystal grains in the direction of the sheet thickness (hereinafter sometimes referred to as "effective crystal grain size") is defined as 7 $\mu$m or less when the crystal grains of the bainite is determined based on a high-angle grain boundary having an orientation difference between adjacent crystals of 15° or more. The bainitic fraction is preferably 85 area% or more and, more preferably, 90 area% or more. The effective crystal grain size is preferably 6 $\mu$m or less and, more preferably, 5 $\mu$m or less.

The microstructure of the steel sheet according to the present invention comprises a microstructure mainly composed of bainite as described above in order to satisfy the strength grade of 490 MPa or more and 650 MPa or less and ensuring excellent fatigue properties. "Bainite" used herein includes bainitic structure such as upper bainite, lower bainite, acicular ferrite, granular bainitic ferrite, etc.

The crystal grain size of the bainite can be made finer compared with that of ferrite, etc. and both of the life to the generation of cracks (crack generation life) and the life after growth of cracks (crack growth life) are improved. Martensite can also provide a fine microstructure. However, since a great amount of dislocations are introduced by shearing deformation caused upon martensitic transformation to deteriorate the crack generation life, improvement of the fatigue properties cannot be obtained as a whole. The crystal grain size (effective crystal grain size) is defined along the direction of the sheet thickness (cut length) because the growth of fatigue cracks generated at the surface of the steel sheet is taken into consideration.

For forming a microstructure mainly comprising the bainite, a quenching treatment is often performed usually after rolling in addition to the incorporation of alloying elements such as C or Mn. However, when the cooling rate is high, it becomes difficult to ensure desired precipitates (to be described later). Accordingly, in the present invention, B has to be added in addition to C, Mn, etc. which are added usually to the steel sheet (to be described later). Since B has an effect of suppressing ferritic transformation, a microstructure mainly comprising the bainite can be ensured stably even when the cooling rate is relatively low.

(Remaining microstructure)

In the microstructure other than the bainitic structure (remaining microstructure), it is necessary that the circle equivalent diameter of the hard remaining microstructure (harder remaining microstructure) is 3 $\mu$m or less and the microstructure is harder than the bainite. The circle equivalent diameter of the harder remaining microstructure is defined as 3 $\mu$m or less, because other property such as toughness may possibly be deteriorated greatly if the size of the remaining microstructure (average size) is more than 3 $\mu$m. For the size of the remaining microstructure, a preferred upper limit is 2.5 $\mu$m or less (more preferably, 2.0 $\mu$m or less) and the preferred lower limit thereof is 0.5 $\mu$m or more. The harder remaining microstructure basically includes martensite and martensite-austenite mixed structure (MA: martensite austenite constituent) and the harder remaining microstructure can improve the crack growth life. A soft microstructure such as ferrite or perlite may be contained partially in the remaining microstructure, the harder remaining microstructure is preferably 1 area% or more (more preferably, 3 area% or more) in order to provide the effect. However, if the harder remaining microstructure is present in a great amount, since mobile dislocations may possibly be introduced into the matrix due to martensitic transformation, they not only deteriorate the fatigue properties, but also possibly deteriorate greatly other properties such as toughness, so that the microstructure is preferably 10 area% or less (more preferably, 7 area% or less)

As a specific requirement for improving the crack growth life, it is necessary that the difference of the hardness between the bainite and the harder remaining microstructure (hardness of harder remaining microstructure) - hardness of bainite: hereinafter represented by ΔH) is Hv 100 or more. The hardness difference ΔH is preferably Hv 120 or more and, more preferably, Hv 140 or more. The upper limit of the hardness difference ΔH is about Hv 180 or less. Particularly, when the harder remaining microstructure comprises martensite or MA, dislocations are introduced into bainite due to shearing deformation caused by martensitic transformation tending to deteriorate the crack generation life. In order to ensure the improvement of the crack growth life that can overcome the lowering of the crack generation life, the hardness difference ΔH has to be Hv 100 or more. In order to increase the hardness of the harder remaining microstructure (also referred to as "second phase" in the present invention) as much as possible to provide the effect of suppressing the crack growth, it is necessary to properly control also the relation for the contents of Mn, Cr, and Mo (to be described later).

The present inventors have investigated also the effect of precipitates on the fatigue properties. As a result, it has been found that a thick steel sheet providing fatigue properties more excellent than usual can be obtained by controlling the precipitates along the vertical cross section parallel to the rolling direction at points of 3 mm depth from the surface of the steel sheet as described below.

(Precipitates)

In order to improve the fatigue properties of the thick steel sheet, it is necessary to finely disperse precipitates (carbides and carbonitrides) having a circle equivalent diameter of 20 nm or less containing at least one of Nb, Ti and V into the steel sheet. For strengthening by precipitates (precipitation strengthening), it is generally effective to disperse the precipitates more finely and in a greater amount. However, if the precipitates are refined excessively, since the precipitates are sheared by dislocations, it is difficult to obtain precipitation strengthening. The critical size at which the precipitates are shared is different depending on the type of the precipitates and the critical size is about 5 nm for the precipitates containing at least one of Nb, Ti, and V. Accordingly, since finer precipitates contribute to the precipitation strengthening, precipitation strengthening can be utilized effectively by finely dispersing the precipitates thereby increasing the number density. In order to ensure predetermined amount of precipitates, it is customary to add a great amount of alloys or perform a heat treatment such as tempering. However, such a method not only increases the material cost and the production cost but also may result a possibility of greatly deteriorating other characteristic such as toughness.

The present inventors have designed alloys while taking notice on precipitates formability by C (hereinafter referred to as "C activity") thereby enabling to ensure the fine precipitates at a low cost and stably. With the view point described above, the addition amounts of elements constituting the precipitates should be controlled properly and, specifically, it is necessary that the contents of Nb, Ti, and V satisfy the following relation (1).

$$0.01 \le [\mathrm{Nb}] + 2[\mathrm{Ti}] + 2[\mathrm{V}] \le 0.10 \quad \cdots (1)$$

(in which [Nb], [Ti] and [V] represents respectively the contents (mass%) of Nb, Ti and V in the steel sheet).

The chemical composition of the steel sheet for improving the fatigue properties after generation of clacks in the present invention is to be described. In the thick steel sheet of the present invention, a thick steel sheet exhibiting excellent fatigue properties can be realized by properly adding alloying elements such as C, Mn, B, etc. thereby ensuring a bainitic structure by a predetermined amount and, at the same time, properly adjusting the addition amounts of Mn, Cr and Mo thereby obtaining a phase mainly comprising bainite for improving the crack growth life, as well as properly restricting the addition amounts of Nb, Ti and V as constituent elements of the precipitates and, further, adjusting the relation of the addition amounts of Cu, Ni, and Si giving effect on the C activity, thereby dispersing and precipitating fine precipitates. With the view point described above, each of the components is adjusted as described below. Unless otherwise specified, the content (%) for each of the chemical components is based on mass%. In the present specification, percentage based on mass (mass%) is identical with the percentage (wt%) based on the weight. Further, "X % or less (not including 0%)" of the content for each of the chemical components is sometimes represented by "more than 0% and X % or less).

(C: 0.010 to 0.1%)

C is an element important for ensuring the strength of the base material (steel sheet), and this is also an element constituting the precipitates. In order to effectively provide such an effect, the C content is defined as 0.010% or more. The C content is preferably 0.02% or more and, more preferably, 0.05% or more. On the other hand, if the C content is excessive, since the harder remaining microstructure is formed coarsely and excessively, the fatigue properties are deteriorated. Accordingly, the C content is defined as 0.1% or less. The C content is preferably 0.08% or less and, more preferably, 0.060% or less.

(Si: 0.3% or less (not including 0%))

While Si is an element essential to ensure the strength of the base material (steel sheet), it is also an element of lowering the C activity. Accordingly, it is necessary that the addition amount is restricted to 0.3% or less. The Si content is preferably 0.25% or less and, more preferably, 0.2% or less. In order to provide the effect described above, the Si content is preferably 0.01% or more and, more preferably, 0.05% or more.

(Mn: 1.0 to 2%)

Mn is an element important for ensuring the quenchability for obtaining the bainitic structure. Mn is important also for ensuring the hard second phase. For effectively providing such an effect, it is necessary that the Mn content is 1.0% or more. The Mn content is preferably 1.2% or more and, more preferably, 1.4% or more. However, as the Mn content becomes excessive, a hard second phase is formed in a great amount to rather deteriorate the fatigue properties. Accordingly, it is necessary that the Mn content is 2% or less. The Mn content is preferably 1.8% or less and, more preferably, 1.6% or less.

(Cr: 0.5 to 2%)

Cr is an element having the effect identical with that of Mn and can stably provide the bainitic structure. In order to effectively provide such an effect, it is necessary that Cr is contained by 0.5% or more. It is preferably, 0.7% or more and it is recommended more preferably to be contained by 0.9% or more. However, if the Cr content becomes excessive, since the fatigue properties may possibly be deteriorated, it is necessary that the Cr content is 2% or less. A preferred upper limit of the Cr content is 1.7% or less and, more preferably, 1.2% or less.

(Mo: 0.005 to 1.5%)

Mo is an element having the effect identical with that of Mn and can stably provide the bainitic structure. Further, Mo is an element also essential to obtain the harder remaining microstructure. In order to provide such an effect, it is necessary that Mo is contained by 0.005% or more and it is preferably 0.01% or more and, more preferably, 0.03% or more. However, if the Mo content is excessive, since the hard second phase is formed excessively to rather deteriorate the fatigue properties, it is necessary that the content is 1.5% or less. A preferred upper limit of the Mo content is 0.7% or less and, more preferably, 0.5% or less.

(B: 0.0005% to 0.005%)

B is an element of improving the quenchability and also an element of suppressing ferritic transformation thereby facilitating to form the bainitic structure. In order to provide such an effect, it is necessary that B is contained by 0.0005% or more. The B content is preferably 0.001% or more and, more preferably, 0.002% or more. However, if the B content is excessive, since no sufficient precipitates can be obtained and the effect of improving the fatigue properties cannot be obtained, it should be 0.005% or less. A preferred upper limit of the B content is 0.004% or less and, more preferably, 0.003% or less.

(One or more of elements selected from Cu: 0.1 to 1.0% and Ni: 0.1 to 1.0%)

Cu and Ni are elements essential to increase the C activity and form fine precipitates. In order to provide such effects, it is necessary that at least one of them is contained by 0.1% or more. The content is preferably 0.15% or more and, more preferably, 0.2% or more. However, if the contents of Cu and Ni are excessive, precipitates are coarsened and not only the improvement of the fatigue properties cannot be obtained but also other properties such as toughness are also deteriorated. With such a view point, any of them should be 1.0% or less and, preferably, 0.8% or less (more preferably, 0.6% or less).

Since Cu, Ni and Si described above are elements giving an effect on the C activity, it is necessary to control the contents such that the relation of the following formula (2) is satisfied in order to stably obtain fine precipitates.

$$0 \le ([Cu] + [Ni]) \cdot 2[Si] \le 1.0 \quad \cdots\cdots(2)$$

(in which [Cu], [Ni] and [Si] represent respectively the contents (mass%) of Cu, Ni, and Si in the steel sheets).

If the value of [Cu] + [Ni]) - 2[Si] (hereinafter referred to as "CA value") is less than 0%, since the C activity becomes insufficient, no sufficient precipitates are obtained and the fatigue properties cannot be improved. Further, if the CA value is more than 1.0 (%), the C activity becomes excessive to rather form coarse precipitates not only failing to obtain the improvement of the fatigue properties but also possibly deteriorate other properties. A preferred lower limit of the CA value is 0.1% or more and, it is preferably, 0.15(%) or more. Further, a preferred upper limit of the CA value is 0.9(%) or less and it is, more preferably, 0.7(%) or less.

(One or more of elements selected from the group consisting of V: 0.05% or less, Nb: 0.05% or less, and Ti: 0.05% or less)

V, Nb, and Ti are elements essential to ensure the bainitic structure by the improvement of quenchability and, in addition, to form precipitates. However, if they are incorporated excessively, precipitates are coarsened failing to obtain sufficient effect of improving the fatigue properties and, accordingly, it is necessary that each of them is restricted to 0.05% or less.

It is necessary that such elements satisfy the relation of the formula (1) described above. If the value of [Nb] + 2[Ti] + 2[V] (hereinafter referred to as "PR value") is less than 0.01(%), no sufficient precipitates can be obtained and the improvement of the fatigue properties cannot be attained. The PR value is preferably 0.03(%) or more and, more preferably, 0.05(%) or more. If the PR value is excessively large, since the precipitates are coarsened to deteriorate the fatigue properties, the value is defined to 0.10(%) or less. The PR value is preferably 0.08(%) or less and, more preferably, 0.06(%) or less.

For ensuring the harder remaining microstructure to provide the effect of suppressing crack growth, it is necessary to properly control also the relation of the contents of Mn, Cr, and Mo. It is necessary that Mn, Cr, and Mo satisfy the following equation (3).

$$2.4 \le [Mn] + 1.5[Cr] + 2[Mo] \le 4.5 \quad \cdots\cdots (3)$$

(where [Mn], [Cr] and [Mo] represent respectively the contents (mass%) of Mn, Cr, and Mo in the steel sheet).

If the value of [Mn] + 1.5[Cr] + 2[Mo] (hereinafter referred to as "Kp value") is less than 2.4(%), since the hardness of the second phase is no more sufficient, an effect of suppressing the crack growth cannot be provided and sufficient fatigue properties cannot be obtained. On the other hand, if the Kp value is more than 4.5(%), while the hardness of the harder remaining microstructure can be ensured, since the fraction of the harder remaining microstructure increases along with coarsening of the harder remaining microstructure (more than 20 area%), other property such as toughness is deteriorated. A preferred lower limit of the Kp value is 2.7(%) or more and, more preferably, it is 2.8(%) or more. Further, a preferred upper limit of the Kp value is 4.0(%) or less and, more preferably, it is 3.5(%) or less.

The basic components in the thick steel sheet of the present invention are as described above with the remainder substantially consisting of iron. Naturally. incorporation of inevitable impurities (for example, P and S) carried into the steel depending on raw materials, materials used, states of production facility, etc. are permitted. Further, in the thick steel sheet of the present invention, positive incorporation of the following elements is also effective and the properties of the thick steel sheet are further improved in accordance with the kind of the elements to be incorporated.

(Ca: 0.005% or less (not including 0%))

Ca is an element of decreasing the shape anisotropy of inclusions (for example, MnS) in the steel, which is an element effective to prevent the inclusions from forming fracture origins and improve the fatigue properties. In order to effectively provide such effects, it is preferred that Ca is contained by 0.0005% or more. It is more preferably 0.001% or more. However, if the Ca content becomes excessive, this lowers the cleanliness in the steel, rather deteriorates the fatigue properties and also possibly lowers other properties such as toughness. Accordingly, it is preferred that the Ca content is 0.005% or less and, more preferably, 0.003% or less.

(Al: 0.10% or less (not including 0%))

Al is an element useful as a deoxidizer and, in order to provide such an effect, Al is preferably contained by 0.01% or more. It is more preferably, 0.02% or more. However, as the Al content becomes excessive, since this deteriorates not only the fatigue properties but also the toughness, etc., Al is preferably 0.10% or less and, more preferably, 0.04% or less.

(N: 0.010% or less (not including 0%))

Since N has an effect of improving the strength by solid-solution strengthening, it is positively contained depending on the necessity. However, if the N content becomes excessive, coarse nitrides are formed to deteriorate the fatigue properties. With such a view point, the N content is preferably 0.010% or less and, more preferably, 0.008% or less. In order to effectively provide the effect due to N, the content is preferably 0.0035% or more and, more preferably, 0.0040% or more.

Since the precipitates hinder the movement of dislocations, precipitation strengthening suppresses accumulation of dislocations due to repetitive fatigue loading, to thereby improve the fatigue properties. However, in thick steel sheets used for ships, bridges, ocean structures, etc. not only the fatigue properties but also the toughness are important factors and coarse precipitates may possibly deteriorate the toughness. Accordingly, it is necessary that fine precipitates are dispersed. However, as the size of the precipitates decreases, they are sheared by dislocations and the strengthening effect by precipitates cannot be obtained. However, since precipitates containing Nb, Ti, V, etc. are not sheared by dislocations even when they are fine precipitates of about 5 nm, they can improve the fatigue properties without deteriorating other properties.

As has been described above, in order to improve the fatigue properties of the thick steel sheet, it is necessary that precipitates containing at least one of Nb, Ti and V (carbides and carbonitrides) having the circle equivalent diameter of 20 nm or less are dispersed in the steel sheet. For strengthening by precipitates (precipitation strengthening), it is generally effective to disperse the precipitates more finely and in a greater amount. With such a view point, it is necessary that the number of precipitates (number density) containing at least one of Nb, Ti and V having the circle equivalent diameter of 20 nm or less is 100 $N/\mu m^2$ or more at a point of 3 mm depth from the surface of the steel sheet. The number density of the precipitates is preferably 150 $N/\mu m^2$ or more and, more preferably, 200 $N/\mu m^2$ or more.

The thickness of the thick steel sheet according to the present invention is not particularly restricted but small thickness less contributes to the improvement of the crack growing life. With such a view point, the thickness is preferably 6 mm or more and, more preferably, 10 mm or more. Further, the thick steel sheet of the present invention provides a thick steel sheet of excellent fatigue properties not found in the prior art by making the plurality of factors compatible for improving the fatigue properties as described above.

The thick steel sheet of the present invention satisfies each of the requirements described above and the production method therefor is not particularly restricted. For obtaining precipitates of improving the fatigue properties in a series of production steps for a thick alloy sheet of melting and casting the steel and then performing hot rolling, it is preferred to use a steel piece (for example, slab) having the chemical composition as described above and control a heating temperature before hot rolling, a cumulative draft during hot rolling, a finish rolling temperature and a finish rolling draft, a cooling rate and a cooling stop temperature after the hot rolling as described below.

Heating temperature: 1000 to 1200°C
Cumulative draft during total hot rolling step: 70% or more
Cumulative draft during finish rolling which is set within a range of $Ar_3$ transformation point + 100°C to $Ar_3$ transformation point: 30% or more
Average cooling rate from finish rolling end to 600°C: 10°C/sec or less.

Before the hot rolling, the slab is preferably heated to a temperature range of 1000 to 1200°C. It is more preferably 1050°C or higher. The cumulative draft in the total hot rolling step is defined as 70% or more. It is preferably 75% or more. In order to decrease the grain size of the bainitic structure, it is necessary to apply a sufficient rolling reduction in a not-recrystallized region. The slab is heated in a temperature range of 1000 to 1200°C to perform sufficient rolling reduction such that 70% or more of cumulative draft can be ensured during hot rolling while preventing the crystal grains from coarsening. For obtaining the bainitic structure, the cumulative draft during finish rolling which is set to a temperature of the $Ar_3$ transformation point + 100°C to $Ar_3$ transformation point is defined as 30% or more (preferably, 40% or more). The temperature at which the finish rolling is completed (finish rolling end temperature) can be set properly so long as the temperature is $Ar_3$ transformation point or higher and it may be higher than the $Ar_3$ transformation point so long as a predetermined cumulative draft can be attained.

The heating temperature upon heating the steel sheet is not particularly restricted and it is preferably defined at about 3 to 10°C/min. If the heating rate is lower than 3°C/min, coarse carbides tend to be precipitated in the slab heating stage, and cannot be sufficiently solid-solubilized in the subsequent step, by which alloying elements are segregated, so that desired precipitates cannot be dispersed finely. On the other hand, if the heating rate exceeds 10°C/min, since the segregation of components in the slab cannot be solved sufficiently, it is difficult to finely disperse desired precipitates.

"The cumulative draft" is a value calculated according to the following formula (4). Further, for the $Ar_3$ transformation point, a value determined according to the following formula (5) is adopted (values shown in Tables 1 and 2 to be described later are also identical).

$$\text{Cumulative draft} = (t_0 - t_1)/t_2 \times 100 \quad \text{----- (4)}$$

[in the formula (4), $t_0$ is a rolling start thickness (mm) of a slab when the temperature at a position of 3 mm from the surface is within the rolling temperature range, $t_1$ is a rolling end thickness (mm) of the slab when the temperature at a position of 3 mm from the surface is within a rolling temperature range, and $t_2$ is a thickness of the steel piece before rolling (for example, slab) respectively.]

$$Ar_3 \text{ transformation point} = 910 - 230 \times [C] + 25 \times [Si] - 74 \times [Mn] -$$
$$56 \times [Cu] - 16 \times [Ni] - 9 \times [Cr] - 5 \times [Mo] - 1620 \times \quad [Nb] \quad \text{------ (5)}$$

[C], [Si], [Mn], [Cu], [Ni], [Cr], [Mo] and [Nb] respectively represent contents (mass%) of C, Si, Mn, Cu, Ni, Cr, Mo, and Nb.

After the completion of the hot rolling, the slab is cooled at an average cooling rate of 10°C/sec or lower (preferably, 8°C/sec or lower) from the finish rolling temperature to 600°C and the cooling stop temperature at the cooling rate can be preferably as 450°C or lower, by which the remaining microstructure can be made harder while finely dispersing the precipitates. The cooling range is defined as "from the finish rolling end temperature to 600°C" because this is a temperature region in which the microstructure of the base metal is formed and in which precipitates are precipitated. Further, in the thick steel sheet of the present invention, bainitic structure can be refined while suppressing the formation of ferrite even when the average cooling rate is 10°C/sec or lower.

As has been described above in relation with the fatigue properties, strengthening due to refinement of crystal grains or the harder second phase in the main microstructure is effective for suppressing the crack growth. However, in general hot rolling, even when the steel sheet after rolling is forcibly cooled, cooling rate in the inside is slower than that in the surface layer of the steel sheet and, even when the microstructure in the surface layer is a fine bainitic structure, the microstructure size in the inside is coarser, or the bainitic fraction is decreased to increase the crack growth rate. Accordingly, for obtaining a steel sheet of excellent fatigue properties and excellent crack growing properties, it is preferred to control the microstructural form of the surface layer and control the microstructural form in the inside of the steel (steel sheet).

(Structure inside the steel sheet)

When the bainitic fraction present in the micro structure at a position for 1/4 of the sheet thickness (t/4 position) is ensured by 80 area% or more and the crystal grains of the bainite is determined based on a high-angle grain boundary having a crystal orientation difference between adjacent crystal grains of 15° or more, the average length of the crystal grain in the direction of the sheet thickness (effective average crystal grain size) is defined as 7 $\mu$m or less. The bainitic fraction is preferably 85 area% or more and, more preferably, 90 area% or more. The effective average crystal grain size is preferably 6 $\mu$m or less and, more preferably, 5 $\mu$m or less.

(Remaining microstructure inside the steel sheet)

For the microstructure other than the bainitic structure (remaining microstructure), it is preferred that a hard remaining microstructure (harder remaining microstructure) has a circular equivalent diameter of 3 $\mu$m or less and is harder than the bainitic structure. Circle equivalent diameter of the harder remaining microstructure is defined as 3 $\mu$m or less because if the average size of the remaining microstructure is more than 3 $\mu$m, this may possibly deteriorate greatly other properties such as toughness. The remaining microstructure basically contains martensite and MA and such harder remaining microstructure can lower the crack growth rate.

For ensuring such a microstructural form, it is preferred to control the cumulative draft during hot rolling and the cooling rate after the hot rolling as described below.

Cumulative draft in the total hot rolling step: 80% or more
Average cooling rate from finish rolling end to 600°C: 1°C/sec or more.

For making the microstructural size to 7 $\mu$m or less at a position of a 1/4 of the steel sheet thickness, it is necessary to increase the cumulative draft in the hot rolling step and the draft is preferably 80% or more. When the cumulative draft is insufficient, even when the microstructure in the surface layer is refined, the microstructure is not refined sufficiently at a position for 1/4 of the steel thickness and the crack growth rate is not lowered sufficiently. This is more preferably 85% or more. Further, for ensuring the bainitic fraction by 80 area% or more at the point for 1/4 sheet thickness, the average cooling rate after the hot rolling is preferably defined to 1°C/sec or higher. It is more preferably 2°C/sec or higher.

Example

The present invention is to be described more specifically with reference to examples. The present invention is no way restricted by the following examples and can be practiced with addition of appropriate modification within a range conforming to the gist described above and to be described later, any of which is included within the technical scope of the present invention.

(Example 1)

After melting steel of chemical compositions shown in the following Table 1 and Table 2 in accordance with a usual melting method and casting them, they were hot rolled under various conditions shown in the following Table 3 (rolling conditions Nos. a to n) to obtain steel sheets each of 18 to 20 mm thickness. In Table 3, the finish rolling draft is a draft attained when finish rolling is completed in a temperature range of $Ar_3$ transformation point + 100°C to $Ar_3$ transformation point (cumulative draft). "Finish rolling draft" shown in Table 3 is a designed value and when the finish rolling end temperature is higher than the $Ar_3$ transformation point + 100°C (that is, rolling is completed before reaching $Ar_3$ transformation point + 100°C), the finish rolling draft is 0% (that is, no rolling reduction for $Ar_3$ transformation point + 100°C to $Ar_3$ transformation point) (for example, Test No. 21 in Table 5). The heating rate during heating is 4 to 5°C/min in each of cases.

[Table 1]

EP 3 040 436 B1

| Steel grade | Chemical composition (mass%), remainder consisting of iron and inevitable impurities | | | | | | | | | | | | | | | | PR value | CA value | Kp value | Ar$_3$ transformation point |
|---|---|---|---|---|---|---|---|---|---|---|---|---|---|---|---|---|---|---|---|---|
| | C | Si | Mn | P | S | Al | Cu | Ni | Cr | Mo | V | Nb | Ti | B | Ca | N | | | | |
| A | 0.04 | 0.15 | 1.55 | 0.007 | 0.0012 | 0.031 | 0.31 | 0.15 | 1.01 | 0.04 | 0 | 0.018 | 0.013 | 0.0018 | 0.0013 | 0.0051 | 0.044 | 0.16 | 3.145 | 732 |
| B | 0.06 | 0.20 | 1.53 | 0.007 | 0.0012 | 0.033 | 0.38 | 0.55 | 0.87 | 0.04 | 0.02 | 0.018 | 0.013 | 0.0021 | 0.0013 | 0.0049 | 0.084 | 0.53 | 2.915 | 721 |
| C | 0.04 | 0.20 | 1.54 | 0.007 | 0.0020 | 0.032 | 0.50 | – | 0.65 | 0.05 | 0.01 | 0.015 | 0.014 | 0.0016 | 0.0015 | 0.0051 | 0.063 | 0.10 | 2.615 | 733 |
| D | 0.03 | 0.15 | 1.53 | 0.009 | 0.0018 | 0.034 | – | 0.35 | 0.92 | 0.04 | 0.01 | 0.014 | 0.017 | 0.0014 | 0.0014 | 0.0054 | 0.068 | 0.05 | 2.99 | 757 |
| E | 0.06 | 0.14 | 1.59 | 0.007 | 0.0016 | 0.031 | 0.18 | 0.18 | 1.03 | 0.06 | 0.04 | – | – | 0.0014 | 0.0013 | 0.0051 | 0.080 | 0.08 | 3.255 | 760 |
| F | 0.05 | 0.16 | 1.51 | 0.007 | 0.0019 | 0.033 | 0.19 | 0.18 | 0.85 | 0.03 | – | 0.040 | – | 0.0019 | 0.0016 | 0.0052 | 0.040 | 0.05 | 2.845 | 705 |
| G | 0.04 | 0.18 | 1.54 | 0.010 | 0.0019 | 0.033 | 0.20 | 0.18 | 0.70 | 0.04 | – | – | 0.040 | 0.0013 | 0.0014 | 0.0054 | 0.080 | 0.02 | 2.67 | 771 |
| H | 0.04 | 0.12 | 1.54 | 0.008 | 0.0016 | 0.031 | 0.31 | 0.13 | 1.03 | 0.05 | 0.01 | 0.013 | 0.018 | 0.0019 | 0.0031 | 0.0057 | 0.069 | 0.20 | 3.185 | 740 |
| I | 0.05 | 0.13 | 1.53 | 0.009 | 0.0017 | 0.090 | 0.21 | 0.13 | 0.88 | 0.05 | 0.01 | 0.014 | 0.016 | 0.0013 | 0.0014 | 0.0051 | 0.066 | 0.08 | 2.95 | 744 |
| J | 0.03 | 0.10 | 1.52 | 0.007 | 0.0020 | 0.039 | 0.30 | 0.14 | 1.30 | 0.06 | 0 | 0.019 | 0.013 | 0.0014 | 0.0013 | 0.005 | 0.045 | 0.24 | 3.59 | 731 |
| K | 0.06 | 0.18 | 1.56 | 0.007 | 0.0016 | 0.041 | 0.31 | 0.31 | 0.96 | 0.30 | 0.01 | 0.017 | 0.014 | 0.0007 | – | 0.0054 | 0.065 | 0.26 | 3.60 | 725 |

[Table 2]

EP 3 040 436 B1

| Steel grade | Chemical composition (mass%), remainder consisting of iron and inevitable impurities | | | | | | | | | | | | | | | | PR value | CA value | Kp value | Ar$_3$ transformation point |
| --- | --- | --- | --- | --- | --- | --- | --- | --- | --- | --- | --- | --- | --- | --- | --- | --- | --- | --- | --- | --- |
| | C | Si | Mn | P | S | Al | Cu | Ni | Cr | Mo | V | Nb | Ti | B | Ca | N | | | | |
| L | 0.15 | 0.21 | 1.10 | 0.007 | 0.0030 | 0.020 | 0.30 | 0.15 | 1.01 | 0.05 | 0.01 | 0.010 | – | 0.0011 | 0.0015 | 0.0051 | 0.030 | 0.03 | 2.715 | 755 |
| M | 0.005 | 0.25 | 1.80 | 0.008 | 0.0012 | 0.050 | 0.26 | 0.26 | 1.05 | 0.04 | – | – | 0.010 | 0.0018 | 0.0014 | 0.0048 | 0.020 | 0.02 | 3.455 | 754 |
| N | 0.03 | 0.62 | 1.64 | 0.007 | 0.0015 | 0.040 | 0.54 | 0.72 | 0.78 | 0.01 | – | 0.015 | 0.015 | 0.0015 | 0.0014 | 0.0048 | 0.045 | 0.02 | 2.83 | 724 |
| O | 0.05 | 0.18 | 0.50 | 0.006 | 0.0015 | 0.040 | 0.21 | 0.18 | 1.04 | 0.08 | – | 0.014 | 0.013 | 0.0017 | 0.0014 | 0.0051 | 0.040 | 0.03 | 2.22 | 819 |
| P | 0.05 | 0.15 | 2.76 | 0.009 | 0.0015 | 0.050 | 0.21 | 0.13 | 0.91 | 0.02 | – | 0.014 | 0.014 | 0.0017 | 0.0015 | 0.0053 | 0.042 | 0.04 | 4.165 | 653 |
| Q | 0.06 | 0.17 | 1.64 | 0.010 | 0.0014 | 0.040 | 0.02 | 0.05 | 0.99 | 0.04 | 0.01 | – | 0.017 | 0.001 | 0.0013 | 0.0054 | 0.054 | −0.27 | 3.205 | 768 |
| R | 0.04 | 0.13 | 1.63 | 0.007 | 0.0014 | 0.060 | 0.50 | 1.01 | 0.56 | 0.03 | – | 0.017 | 0.002 | 0.0014 | 0.0013 | 0.0046 | 0.020 | 1.25 | 2.53 | 709 |
| S | 0.06 | 0.14 | 1.64 | 0.007 | 0.0015 | 0.010 | 0.12 | 0.11 | 0.77 | 0.08 | 0.002 | 0.001 | 0.002 | 0.0013 | 0.0013 | 0.0043 | 0.009 | −0.05 | 2.955 | 761 |
| T | 0.06 | 0.20 | 1.58 | 0.006 | 0.0016 | 0.050 | 0.11 | 0.13 | 0.67 | 0.04 | 0.02 | 0.045 | 0.020 | 0.002 | 0.0014 | 0.0048 | 0.125 | −0.16 | 2.665 | 697 |
| U | 0.04 | 0.23 | 1.57 | 0.008 | 0.0013 | 0.040 | 0.31 | 0.29 | 0.39 | 0.01 | 0.01 | 0.018 | 0.014 | 0.0018 | 0.0015 | 0.0051 | 0.066 | 0.14 | 2.175 | 736 |
| V | 0.05 | 0.18 | 1.86 | 0.009 | 0.0014 | 0.040 | 0.29 | 0.32 | 1.82 | 1.42 | 0.01 | 0.019 | 0.015 | 0.002 | 0.0015 | 0.0045 | 0.069 | 0.25 | 7.43 | 690 |
| W | 0.04 | 0.07 | 1.59 | 0.007 | 0.0014 | 0.040 | 0.11 | 0.14 | 0.82 | 0.04 | 0.01 | 0.014 | 0.017 | 0.0002 | 0.0013 | 0.0046 | 0.068 | 0.11 | 2.9 | 746 |
| X | 0.04 | 0.15 | 1.54 | 0.008 | 0.0013 | 0.070 | 0.12 | 0.14 | 0.95 | 0.05 | – | 0.013 | 0.015 | 0.01 | 0.0015 | 0.0045 | 0.043 | −0.04 | 3.065 | 752 |

[Table 3]

| Rolling condition No. | Heating temperature [°C] | Cumulative draft in total hot rolling step [%] | Finish rolling end temperature [°C] | Finish rolling draft [%] | Average cooling rate [°C/sec] | Cooling stop temperature [°C] |
|---|---|---|---|---|---|---|
| a | 1100 | 80 | 820 | 40 | 5 | 400 |
| b | 1150 | 82 | 780 | 40 | AC* | |
| c | 1150 | 75 | 800 | 40 | 5 | 200 |
| d | 1150 | 80 | 800 | 40 | 5 | 400 |
| e | 1100 | 80 | 800 | 40 | 8 | 400 |
| f | 1100 | 80 | 810 | 40 | 2 | 400 |
| g | 1300 | 80 | 820 | 40 | 5 | 400 |
| h | 900 | 80 | 820 | 40 | 5 | 400 |
| i | 1100 | 60 | 820 | 40 | 5 | 400 |
| j | 1100 | 75 | 800 | 10 | 5 | 400 |
| k | 1100 | 80 | 900 | 35 | 5 | 400 |
| l | 1100 | 80 | 700 | 40 | 5 | 400 |
| m | 1100 | 80 | 800 | 40 | 30 | 400 |
| n | 1100 | 80 | 800 | 40 | 5 | 600 |
| * AC: Steel was cooled to room temperature by air cooling (average cooling rate: 0.8°C/sec) | | | | | | |

For each of the steel sheets, bainitic fraction, effective crystal grain size, size and fraction of the second phase (harder remaining microstructure), hardness difference ΔH between the bainite and the harder remaining microstructure, tensile strength, and fatigue properties, number density and size of fine precipitates of the steel sheet were measured. In each of measurements, the test specimen was sampled such that the evaluation position is at a 3 mm position from the surface layer of the steel sheet.

(Bainitic fraction)

Samples were cut out such that a surface parallel to the rolling direction of the steel sheet and vertical to the surface of the steel sheet was exposed at a position of 3 mm depth from the surface of the steel sheet, the samples were polished by using wet Emery paper at #150 to #1000 and, subsequently, mirror finished by using a diamond abrasive. After etching the mirror polished test specimen with 2% nitric acid - ethanol solution (nital solution), a view field of 150 μm × 200 μm was observed under a microscope at an observation factor of 400X to measure the bainitic fraction (area%) by image analysis. Bainitic fraction was determined for five view fields in total and an average value thereof was adopted (average value for 5 view fields).

(Effective crystal grain size)

Effective crystal grain size (high-angle crystal grain size) was measured for a cross section parallel to the rolling direction of the steel sheet at a position of 3 mm depth from the surface of the steel sheet by SEM (Scanning Electron Microscope) - EBSP (Electron Backscatter Pattern method). Specifically, an EBSP apparatus manufactured by TEX SEM Laboratories Co. (commercial name: "OIM") was used in combination with SEM and crystal grain size was measured for the boundaries with a tilting angle (crystal orientation difference) of 15° or more as the crystal grain boundary. As the measuring conditions, a measuring region was 200 μm × 200 μm and a measuring step was 0.5 μm spacing, and measuring points with a confidence index showing the reliability of measuring orientation of less than 0.1 were excluded from the object of analysis. For the thus obtained crystal grain boundary, the cut lengths at 100 positions were measured along the direction of the sheet thickness and the average value thereof was adopted as the effective crystal grain size. The effective crystal grain size of 2.0 μm or less was judged as measurement noises and excluded.

(Size and fraction of the harder remaining microstructure)

For the size and the fraction of the harder remaining microstructure, samples were cut out by the same method as that for the measurement of the bainitic fraction, polished and etched, subsequently, observed under SEM at an observation factor of 1000X and the size of the remaining microstructure (size of the harder remaining microstructure) and the fraction (fraction of the harder remaining microstructure) sere determined by image analysis. For both of them, average values for five view fields were adopted.

(Hardness difference ΔH between bainite and harder remaining microstructure)

The hardness difference between the bainite and the harder remaining microstructure was measured by using a super micro indentation hardness tester (manufactured by Elionix Co.). Test specimens were cut out and polished and etched in the same manner as that for the measurement of the bainitic fraction, and a super micro indentation hardness test was carried out on the bainite and the hard remaining microstructures for each 10 points under a load of 10 mN and an average value of the obtained hardness difference (ΔH: hardness of harder remaining microstructure - hardness of bainitic structure) was adopted.

(Tensile strength)

Tensile test specimens each of a sheet thickness of 4 mm and a gauge length of 35 mm were sampled at positions of 2 to 6 mm depth from the surface layer in each of steel sheets and a tensile test was carried out according to JIS Z 2241 (2011) to measure a tensile strength TS.

(Fatigue properties)

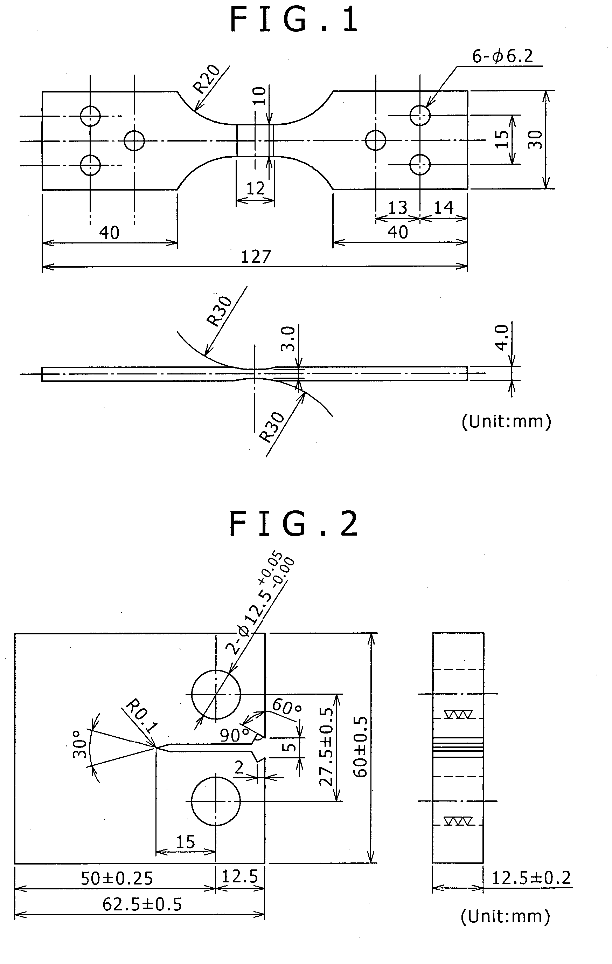

Fatigue properties were measured by preparing test specimens as illustrated in Fig. 1 by cutting out steel of 4 mm thickness from positions at 2 to 6 mm depth from the surface layer of the plate thickness. The surface of the test specimen was polished to #1200 by Emery paper to remove the effect of the surface state. For the obtained test specimen, a fatigue test was carried out under the following conditions by using an electric servo hydraulic fatigue testing system manufactured by Instron Co.

| | |
|---|---|
| Test circumstance: | Room temperature in atmospheric air |
| Control method: | Load control |
| Control waveform: | Sinusoidal wave |
| Stress ratio: | R = -1 |
| Test rate: | 20 Hz |
| Number of cycles at test completion: | 5,000,000 |

The fatigue properties undergo the effect of the tensile strength and, in order to remove the effect, a fatigue limit ratio at 5,000,000 cycles was determined and those having a fatigue limit at 5,000,000 cycles of more than 0.51 were evaluated as satisfactory. The fatigue limit at 5,000,000 cycles is a value obtained by dividing a fatigue strength at 5,000,000 cycles by a tensile strength and the fatigue strength at 5,000,000 cycles was decided as below. A fatigue test was carried out on each of the test specimens at a stress amplitude where the value obtained by dividing a stress amplitude $\sigma a$ with a tensile strength TS ($\sigma a$/TS) was 0.51, and those not ruptured upon reaching 5,000,000 cycles were evaluated as satisfactory and indicated by "○" in the following Tables 4 and 5 (those ruptured are evaluated as failed and indicated by "×". Further, a fatigue test was carried out at a stress amplitude of ($\sigma a$/TS) of 0.53 and those not ruptured upon reaching 5,000,000 cycles were represented by "◎" in the following Tables 4 and 5.

(Number density and size of precipitates)

Test specimens prepared from samples taken out at 3 mm positions from the surface of a steel sheet by an extraction replica method were observed by a transmission electron microscope (TEM) at an observation factor of 150,000X, for five view fields of observation portions, each view field of 750 nm × 625 nm, in five view fields of observation portions, and areas of precipitates containing at least one of Nb, Ti and V in the view field were measured by image analysis to calculate a circle equivalent diameter of each of precipitates based on the area. Inclusion of at least one of Nb, Ti and V was judged by EDX (Energy Dispersive X-ray spectrometry). The number of precipitates having a circle equivalent diameter of 20 nm or less was converted per 1 $\mu m^2$ as a number density.

The results are shown in the following Table 4 and Table 5.

[Table 4]

| Test No. | Steel grade | Rolling condition No. | Tensile strength TS [MPa] | Bainitic fraction* [area%] | Effective crystal grain size [μm] | Size of harder remaining microstructure [μm] | Fraction of harder remaining microstructure [area%] | ΔH | Number density of precipitates [N/μm²] | Fatigue properties |
|---|---|---|---|---|---|---|---|---|---|---|
| 1 | A | a | 616 | 91 | 5.6 | 0.7 | 3.9 | 111 | 264 | ◎ |
| 2 | A | c | 601 | 94 | 6.1 | 0.9 | 4.1 | 120 | 271 | ◎ |
| 3 | A | d | 620 | 93 | 6.4 | 0.8 | 2.7 | 164 | 267 | ◎ |
| 4 | A | e | 597 | 91 | 5.1 | 1.2 | 5.4 | 114 | 173 | ○ |
| 5 | B | b | 645 | 88 | 5.3 | 1.0 | 2.8 | 134 | 240 | ◎ |
| 6 | B | e | 644 | 89 | 4.9 | 1.1 | 3.0 | 121 | 151 | ○ |
| 7 | B | f | 639 | 86 | 6.1 | 1.5 | 2.6 | 117 | 284 | ○ |
| 8 | C | c | 554 | 91 | 6.4 | 0.7 | 4.1 | 124 | 191 | ○ |
| 9 | D | a | 524 | 88 | 5.7 | 1.4 | 3.7 | 121 | 204 | ◎ |
| 10 | E | a | 574 | 83 | 6.1 | 1.2 | 5.7 | 118 | 231 | ○ |
| 11 | F | b | 591 | 91 | 5.9 | 1.0 | 2.6 | 117 | 134 | ○ |
| 12 | G | b | 584 | 93 | 6.0 | 0.9 | 3.9 | 124 | 197 | ○ |
| 13 | H | b | 581 | 90 | 5.8 | 0.7 | 1.9 | 123 | 204 | ◎ |
| 14 | I | a | 617 | 83 | 6.1 | 0.8 | 2.4 | 115 | 183 | ○ |
| 15 | J | a | 587 | 94 | 4.9 | 0.9 | 3.2 | 117 | 211 | ◎ |
| 16 | K | a | 638 | 90 | 4.7 | 1.3 | 1.7 | 107 | 174 | ○ |

* Those other than bainitic fraction and harder remaining microstructure fraction are soft microstructures (ferrite, etc.)

[Table 5]

| Test No. | Steel grade | Rolling condition No. | Tensile strength TS [MPa] | Bainitic fraction* [area%] | Effective crystal grain size [μm] | Size of harder remaining microstructure [μm] | Fraction of harder remaining microstructure [area%] | ΔH | Number density of precipitates [N/μm²] | Fatigue properties |
|---|---|---|---|---|---|---|---|---|---|---|
| 17 | A | g | 499 | 83 | 10.7 | 1.2 | 2.7 | 145 | 131 | × |
| 18 | A | h | 514 | 74 | 7.6 | 1.5 | 3.1 | 131 | 14 | × |
| 19 | A | i | 536 | 67 | 6.1 | 0.9 | 2.4 | 110 | 24 | × |
| 20 | B | j | 567 | 87 | 11.7 | 1.4 | 3.6 | 113 | 51 | × |
| 21 | B | k | 433 | 24 | 8.3 | 1.3 | 4.1 | 123 | 21 | × |
| 22 | A | l | 577 | 61 | 6.1 | 0.9 | 2.0 | 110 | 24 | × |
| 23 | B | m | 639 | 91 | 4.9 | 1.1 | 1.7 | 121 | 0 | × |
| 24 | B | n | 617 | 83 | 6.1 | 2.8 | 9.7 | 24 | 71 | × |
| 25 | L | a | 627 | 70 | 8.3 | 5.4 | 25.7 | 156 | 193 | × |
| 26 | M | b | 464 | - | - | 1.0 | 2.3 | - | - | - |
| 27 | N | a | 634 | 85 | 6.6 | 1.5 | 3.7 | 118 | 0 | × |
| 28 | O | a | 441 | - | - | 1.1 | 4.8 | - | 127 | - |
| 29 | P | l | 713 | 84 | 6.1 | 4.5 | 10.7 | 134 | 41 | × |
| 30 | Q | c | 541 | 83 | 6.3 | 1.4 | 3.9 | 114 | 14 | × |
| 31 | R | d | 637 | 91 | 5.7 | 1.1 | 2.1 | 121 | 19 | × |
| 32 | S | a | 574 | 70 | 10.1 | 1.3 | 1.7 | 112 | 23 | × |
| 33 | T | b | 627 | 93 | 6.1 | 0.7 | 3.4 | 124 | 22 | × |
| 34 | U | c | 545 | 54 | 9.1 | 0.6 | 2.7 | 56 | 167 | × |
| 35 | V | b | 681 | 91 | 5.1 | 3.4 | 10.4 | 137 | 107 | × |
| 36 | W | a | 624 | 96 | 4.9 | 0.9 | 3.6 | 141 | 23 | × |
| 37 | X | a | 534 | 64 | 6.1 | 1.1 | 2.7 | 117 | 127 | × |

\* Those other than bainitic fraction and harder remaining microstructure fraction are soft microstructures (ferrite, etc.)

In view of the results, it can be considered as below. That is, in Test Nos. 1 to 16 (Table 4), since chemical compositions and steel production conditions are appropriately controlled, they satisfy the requirements defined in the present invention (structure, precipitates) and provide excellent fatigue properties.

On the other hand, in Test Nos. 17 to 37, since at least one of the chemical compositions and production conditions of steel sheets was not appropriate, the test result of the fatigue properties was poor. Among them, in Test No. 17, heating temperature before hot rolling was excessively high (rolling condition No. g), the effective crystal grain size was increased to deteriorate the fatigue properties.

In Test No. 18, the heating temperature before hot rolling was excessively lower (rolling condition No. h), the bainitic fraction was lowered, the effective crystal grain size was increased and, in addition, the number density of the precipitates was decreased to deteriorate the fatigue properties. In Test No. 19, the cumulative draft during hot rolling was excessively decrease (rolling condition No. i), and the number density of the precipitates was decreased to deteriorate the fatigue properties.

In Test No. 20, the finish rolling draft was decreased, the effective crystal grain size was excessively large, and the number density of the precipitates was decreased to deteriorate the fatigue properties. In Test No. 21, the finish rolling end temperature was excessively high (rolling condition No. k: the draft in the finish rolling is substantially 0%), the tensile strength was lowered, as well as the bainitic fraction was lowered, the effective crystal grain size was increased and, in addition, the number density of the precipitates was also decreased to deteriorate the fatigue properties. In Test No. 22, the finish rolling end temperature was excessively low (rolling condition No. 1), the bainitic fraction was decreased and, in addition, the number density of precipitates was also decreased to deteriorate the fatigue properties.

In Test No. 23, the cooling rate after the hot rolling was high and the number density of precipitates was not attained (fine precipitates were not dispersed) to deteriorate the fatigue properties. In Test No. 24, the cooling stop temperature was high (rolling condition No. n), and the number density of precipitates was decreased to deteriorate the fatigue properties.

Test No. 25 is an example of using steel with excess C content (steel grade L), in which the bainitic fraction was decreased to deteriorate the fatigue properties. Test No. 26 is an example of using steel of less C content (steel grade M) in which predetermined tensile strength was not attained (other properties were not evaluated).

Test No. 27 is an example of using steel with excess Si content (steel grade N) in which the number density of the precipitates was not attained (fine precipitates were not dispersed) to deteriorate the fatigue properties. Test No. 28 is an example of using steel with less Mn content (steel grade O) in which a predetermined tensile strength was not attained (other properties were not evaluated).

Test No. 29 is an example of using steel with excess Mn content (steel grade P) in which the size and the fraction of the harder remaining microstructure were excessive to deteriorate the fatigue properties. Test No. 30 is an example of using steel with the content of Cu and Ni being insufficient and CA value was small (steel grade Q), in which the number of density of the precipitates was decreased to deteriorate the fatigue properties. Test No. 31 is an example of using steel with large CA value (steel grade R) (Ni contents was also excessive), in which coarse precipitates were increased and the number density of precipitates was decreased to deteriorate the fatigue properties.

Test No. 32 is an example of using steel piece with small PR value and CA value (steel grade S), in which the bainitic fraction could not be ensured and the number density of the precipitates was small to deteriorate the fatigue properties. Test No. 33 is an example of using a slab of large PR value and a small CA value (steel grade T), in which the number density of the precipitates was decreased to deteriorate the fatigue properties.

Test No. 34 is an example of using a steel piece with small Kp value (steel grade U), in which the bainitic fraction was decreased, the effective crystal grain size was increased, and ΔH was also decreased to deteriorate fatigue properties. Test No. 35 is an example of using a steel piece of large Kp value (steel grade V) in which the size and the fraction of the harder remaining microstructure were excessive to deteriorate the fatigue properties.

Test No. 36 is an example of using a steel piece with less B content (steel grade W), in which the number density of the precipitates was decreased to deteriorate the fatigue properties. Test No. 37 is an example of using steel with excess B content (steel grade X), in which the CA value was also decreased and the bainitic fraction was decreased to deteriorate the fatigue properties.

(Example 2)

For each of steel sheets of Test Nos. 1 to 16 shown in Table 4, the bainitic fraction, the effective crystal grain size, and the size of the second phase at the position for 1/4 of the sheet thickness were evaluated by the same method as that shown in Example 1. The sampling method of the test specimen was identical with that described above except for setting a position at 1/4 of the sheet thickness. Further, crack growth rate of the steel sheets was measured by the following method.

(Crack growth rate)

A fatigue crack growth test was carried out by an electric servo hydraulic fatigue tester under the following conditions using compact test specimens according to ASTM E647, to measure the crack growth rate. The compact test specimen was sampled from a position at 1/2 of the sheet thickness and a shape as illustrated in Fig. 2 was used. A compliance method was adopted for the crack length.

| | |
|---|---|
| Test circumstance: | Room temperature, in atmospheric air |
| Control method: | Load control |
| Control waveform: | Sinusoidal wave |
| Stress ratio: | R = -1 |
| Test rate: | 5 - 20 Hz |

Values in a stable growth region $\Delta K = 20$ (Mpa · m$^{1/2}$) where the Paris' Law according to the following formula (6) was established was evaluated as a representative value. Those having a crack growth rate of $5,0 \times 10^{-5}$ mm/cycle or less at $\Delta K = 20$ (MPa · m$^{1/2}$) were evaluated as excellent for the crack growth properties.

$$da/dn = C(\Delta K)^m \quad \cdots\cdots (6)$$

[in the formula (6), a represents crack length, n represents number of repetition, and C and m represent constants determined by material and conditions of load, etc. respectively).

The results are shown in the following Table 6.

[Table 6]

| Test No. | Steel grade | Rolling condition No. | Bainitic fraction [area%]* | Effective crystal grain size [μm] | Size of harder remaining microstructure [μm] | Crack growing speed (× 10$^{-5}$ mm/cycle) |
|---|---|---|---|---|---|---|
| 1 | A | a | 85 | 5.6 | 0.7 | 1.92 |
| 2 | A | c | 88 | 11.2 | 0.9 | 5.21 |
| 3 | A | d | 84 | 6.4 | 0.8 | 1.97 |
| 4 | A | e | 85 | 5.1 | 1.2 | 1.92 |
| 5 | B | b | 70 | 5.3 | 1.0 | 6.31 |
| 6 | B | e | 84 | 4.9 | 1.1 | 1.92 |
| 7 | B | f | 81 | 6.1 | 1.5 | 1.94 |
| 8 | C | c | 85 | 10.9 | 0.7 | 5.14 |
| 9 | D | a | 81 | 5.7 | 1.4 | 1.89 |
| 10 | E | a | 84 | 6.1 | 1.2 | 3.41 |
| 11 | F | b | 87 | 5.9 | 1.0 | 1.97 |
| 12 | G | b | 73 | 6.0 | 0.9 | 5.83 |
| 13 | H | b | 72 | 5.8 | 0.7 | 6.01 |
| 14 | I | a | 82 | 6.1 | 0.8 | 3.24 |
| 15 | J | a | 94 | 4.9 | 0.9 | 1.87 |
| 16 | K | a | 83 | 4.7 | 1.3 | 1.88 |
| * Those other than the bainitic fraction and harder remaining microstructure fraction are soft microstructures (ferrite, etc.) | | | | | | |

In view of the results, it can be considered as below. That is, since the chemical compositions and production conditions of the steel were appropriately controlled in Test Nos. 1, 3, 4, 6, 7, 9 to 11, and 14 to 16, preferred conditions inside the steel sheet (structure, precipitates) were satisfied and excellent fatigue crack growth properties (crack growth rate (crack growth rate of $5.0 \times 10^{-5}$ mm/cycle or less) were obtained.

On the contrary, in Test Nos. 2 and 8, the cumulative draft in the total hot rolling step was decreased to less than the cumulative draft during hot rolling (rolling condition No. c) and the effective crystal grain size was increased to deteriorate the fatigue crack growth properties. Further, in Test Nos. 5, 12, 13, the cooling rate after the hot rolling was lowered (rolling condition No. b) and the bainitic fraction was decreased to deteriorate the fatigue crack growth properties.

While the present invention has been described specifically with reference to specified embodiments, it will be apparent to a person skilled in the art that various changes and modifications are possible without departing from the scope of the present invention.

## Claims

1. A thick steel sheet excellent in fatigue properties comprising, by mass%, 0.010 to 0.1% of C, more than 0% and 0.3% or less of Si, 1.0 to 2% of Mn, 0.5 to 2% of Cr, 0.005 to 1.5% of Mo, and 0.0005 to 0.005% of B, respectively, and comprising one or more elements selected from 0.1 to 1.0% of Cu, and 0.1 to 1.0% of Ni, and one or more element selected from the group consisting of 0.05% or less of V, 0.05% or less of Nb, and 0.05% or less of Ti, and optionally further comprises more than 0% and 0.005% or less Ca, more than 0% and 0.10% or less Al, and more than 0% and 0.010% or less of N, in which the elements satisfy the relation of the following formulas (1) to (3), and the remainder of iron and inevitable impurities, in which the micro structure satisfies the following requirements, (a) to (d) when measured at an observation position at a depth of 3 mm from the surface of a steel sheet for a vertical cross section parallel to a rolling direction, and precipitates satisfy the following requirement (A):

$$0.01 \leq [\text{Nb}] + 2[\text{Ti}] + 2[\text{V}] \leq 0.10 \quad \cdots\cdots (1)$$

(where [Nb], [Ti], and [V] represent respectively the contents of Nb, Ti and V in the steel sheet on the mass% base),

$$0 \leq ([\text{Cu}] + [\text{Ni}]) \cdot 2[\text{Si}] \leq 1.0 \quad \cdots\cdots (2)$$

(where [Cu], [Ni] and [Si] represent respectively the contents of Cu, Ni, and Si in the steel sheet on the mass% base), and

$$2.4 \leq [\text{Mn}] + 1.5[\text{Cr}] + 2[\text{Mo}] \leq 4.5 \quad \cdots\cdots (3)$$

(where [Mn], [Cr] and [Mo] represent respectively the contents of Mn, Cr, and Mo in the steel sheet on the basis of mass%),

    (a) the micro structure comprises a bainitic structure and a remaining microstructure harder than the bainite where the bainitic fraction is 80 area% or more in the whole microstructure,
    (b) when the crystal grain size of the bainite is determined based on a high-angle grain boundary having an orientation difference between adjacent crystals of 15° or greater, an average length of the crystal grains in the direction of the sheet thickness is 7 $\mu$m or less,
    (c) a circle equivalent diameter of a harder remaining microstructure is 3 $\mu$m or less, and
    (d) a difference of hardness between the bainite and the harder remaining microstructure (hardness of the harder remaining microstructure - hardness of the bainite) is Hv 100 or more, and
    (A) the number of precipitates containing at least one of Nb, Ti, and V each having a circle equivalent diameter of 20 nm or less is 100 N/$\mu$m$^2$ or more.

2. The thick steel sheet according to claim 1, wherein the sheet further comprises at least one element selected from, by mass %, more than 0% and 0.005% or less of Ca, more than 0% and 0.10% or less of Al, and more than 0% and 0.010% or less of N.

3. The thick steel sheet according to claim 1 or 2, wherein
the micro structure satisfies the following requirements (e) to (g) when observed for a vertical cross section parallel to the rolling direction at a position of 1/4 for the sheet thickness (t/4 position): in which

(e) the micro structure comprises a bainitic structure and a remaining microstructure harder than the bainite, in which the bainitic fraction in the entire microstructure is 80 area% or more,
(f) when the crystal grain of the bainite was determined based on a high-angle grain boundary having an orientation difference between adjacent crystals of 15° or more, the average length of the crystal grain in the direction of the sheet thickness is 7 $\mu$m or less, and
(g) the circle equivalent diameter of the harder remaining microstructure is 3 $\mu$m or less.

4. A method for producing a thick steel sheet of excellent fatigue properties in which a steel piece of the chemical composition according to claim 1 or 2 is hot rolled under the following conditions
heating temperature : 1000 to 1200°C
cumulative draft in the total hot rolling step: 70% or higher
cumulative draft during finish rolling which is set within a range of $Ar_3$ transformation point + 100°C to $Ar_3$ transformation point: 30% or more
average cooling rate from finish rolling completion to 600°C: 10°C/sec or less.

5. The method for producing a thick steel sheet according to claim 4 wherein the cooling stop temperature is 450°C or lower.


**Patentansprüche**

1. Dickes Stahlblech mit ausgezeichneten Ermüdungseigenschaften, umfassend, in Massen-%, jeweils 0,010 bis 0,1% C, mehr als 0% und 0,3% oder weniger Si, 1,0 bis 2% Mn, 0,5 bis 2% Cr, 0,005 bis 1,5% Mo und 0,0005 bis 0,005% B und umfassend ein oder mehrere Elemente, ausgewählt aus 0,1 bis 1,0% Cu und 0,1 bis 1,0% Ni und ein oder mehrere Elemente, ausgewählt aus der Gruppe, bestehend aus 0,05% oder weniger V, 0,05% oder weniger Nb und 0,05% oder weniger Ti, und gegebenenfalls weiter umfassend mehr als 0% und 0,005% oder weniger Ca, mehr als 0% und 0,10% oder weniger Al und mehr als 0% und 0,010% oder weniger N, wobei die Elemente die Beziehung der folgenden Formeln (1) bis (3) erfüllen, und den Rest aus Eisen und unvermeidbaren Verunreinigungen, wobei die Mikrostruktur die folgenden Voraussetzungen (a) bis (d) erfüllt, wenn sie an einer Beobachtungsposition in einer Tiefe von 3 mm von der Oberfläche eines Stahlblechs für einen vertikalen Querschnitt parallel zu einer Walzrichtung gemessen werden, und Ausscheidungen die folgende Voraussetzung (A) erfüllen:

$$0,01 \leq [Nb] + 2[Ti] + 2[V] \leq 0,10 \qquad ----- (1)$$

(wobei [Nb], [Ti] und [V] jeweils die Gehalte von Nb, Ti und V in dem Stahlblech auf der Massen-%-Basis darstellen),

$$0 \leq ([Cu] + [Ni]) - 2[Si] \leq 1,0 \qquad ----- (2)$$

(wobei [Cu], [Ni] und [Si] jeweils die Gehalte von Cu, Ni und Si in dem Stahlblech auf der Massen-%-Basis darstellen), und

$$2,4 \leq [Mn] + 1,5[Cr] + 2[Mo] \leq 4,5 \qquad ----- (3)$$

(wobei [Mn], [Cr] und [Mo] jeweils die Gehalte von Mn, Cr und Mo in dem Stahlblech auf der Massen-%-Basis darstellen),

(a) die Mikrostruktur umfasst eine bainitische Struktur und eine verbleibende Mikrostruktur, die härter als der Bainit ist, wobei der bainitische Anteil 80 Flächen-% oder mehr in der gesamten Mikrostruktur beträgt,
(b) wenn die Kristallkorngröße des Bainits auf Basis einer Hochwinkel-Korngrenze mit einem Orientierungsunterschied zwischen benachbarten Kristallen von 15° oder größer bestimmt wird, beträgt eine durchschnittliche Länge der Kristallkörner in der Richtung der Blechdicke 7 μm oder weniger,

(c) ein Kreisäquivalentdurchmesser einer härteren verbleibenden Mikrostruktur beträgt 3 μm oder weniger, und

(d) ein Härteunterschied zwischen dem Bainit und der härteren verbleibenden Mikrostruktur (Härte der härteren verbleibenden Mikrostruktur - Härte des Bainits) ist Hv 100 oder mehr, und

(A) die Anzahl von Ausscheidungen, die mindestens eines von Nb, Ti und V enthalten, die jeweils einen Kreisäquivalentdurchmesser von 20 nm oder weniger aufweisen, ist 100 N/μm² oder mehr.

**2.** Dickes Stahlblech nach Anspruch 1, wobei das Blech weiter mindestens ein Element umfasst, ausgewählt aus, in Massen-%, mehr als 0% und 0,005% oder weniger Ca, mehr als 0% und 0,10% oder weniger Al und mehr als 0% und 0,010% oder weniger N.

**3.** Dickes Stahlblech nach Anspruch 1 oder 2, wobei die Mikrostruktur die folgenden Anforderungen (e) bis (g) erfüllt, wenn sie für einen vertikalen Querschnitt parallel zu der Walzrichtung an einer Position von 1/4 für die Blechdicke (t/4-Position) beobachtet wird: wobei

(e) die Mikrostruktur eine bainitische Struktur und eine verbleibende Mikrostruktur, die härter als der Bainit ist, umfasst, wobei der bainitische Anteil in der gesamten Mikrostruktur 80 Flächen-% oder mehr beträgt,

(f) wenn das Kristallkorn des Bainits auf Basis einer Hochwinkel-Korngrenze mit einem Orientierungsunterschied zwischen benachbarten Kristallen von 15° oder größer bestimmt wurde, die durchschnittliche Länge des Kristallkorns in der Richtung der Blechdicke 7 μm oder weniger beträgt, und

(g) der Kreisäquivalentdurchmesser der härteren verbleibenden Mikrostruktur 3 μm oder weniger beträgt.

**4.** Verfahren zur Herstellung eines dicken Stahlblechs mit ausgezeichneten Ermüdungseigenschaften, bei dem ein Stahlstück der chemischen Zusammensetzung nach Anspruch 1 oder 2 unter den folgenden Bedingungen warmgewalzt wird:

Erwärmtemperatur: 1000 bis 1200°C

Gesamtverstreckung im gesamten Warmwalzschritt: 70% oder mehr Gesamtverstreckung während des Fertigwalzens, die in einem Bereich von Ar$_3$-Transformationspunkt + 100°C bis Ar$_3$-Transformationspunkt einge-stellt ist: 30% oder mehr

durchschnittliche Abkühlrate von Fertigwalzvollendung auf 600°C: 10°C/sek oder weniger.

**5.** Verfahren zur Herstellung eines dicken Stahlblechs nach Anspruch 4, wobei die Abkühlstopptemperatur 450°C oder weniger beträgt.

## Revendications

**1.** Tôle d'acier épaisse excellente en termes de propriétés à la fatigue comprenant, en % en masse, 0,010 à 0,1 % de C, plus de 0 % et 0,3 % ou moins de Si, 1,0 à 2 % de Mn, 0,5 à 2 % de Cr, 0,005 à 1,5 % de Mo, et 0,0005 à 0,005 % de B, respectivement, et comprenant un ou plusieurs éléments choisis parmi du Cu à 0,1 à 1,0 %, et du Ni à 0,1 à 1,0 %, et un ou plusieurs éléments choisis dans le groupe constitué de V à 0,05 % ou moins, de Nb à 0,05 % ou moins, et de Ti à 0,05 % ou moins, et comprenant en outre facultativement plus de 0 % et 0,005 % ou moins de Ca, plus de 0 % et 0,10 % ou moins d'Al, et plus de 0 % et 0,010 % ou moins de N,

dans laquelle les éléments satisfont la relation des formules (1) à (3) suivantes, et le reste étant constitué de fer et d'impuretés inévitables, dans laquelle

la microstructure satisfait les exigences (a) à (d) suivantes lors d'une mesure au niveau d'un point d'observation à une profondeur de 3 mm à partir de la surface de la tôle d'acier pour une section transversale verticale parallèle à une direction de laminage, et des précipités satisfont l'exigence (A) suivante :

$$0,01 \leq [Nb] + 2[Ti] + 2[V] \leq 0,10 \qquad (1)$$

(où [Nb], [Ti] et [V] représentent respectivement les teneurs en Nb, Ti et V dans la tôle d'acier sur la base en % en masse),

$$0 \leq ([\text{Cu}] + [\text{Ni}]) - 2[\text{Si}] \leq 1,0 \qquad (2)$$

(où [Cu], [Ni] et [Si] représentent respectivement les teneurs en Cu, Ni et Si dans la tôle d'acier sur la base en % en masse), et

$$2,4 \leq [\text{Mn}] + 1,5[\text{Cr}] + 2[\text{Mo}] \leq 4,5 \qquad (3)$$

(où [Mn], [Cr] et [Mo] représentent respectivement les teneurs en Mn, Cr et Mo dans la tôle d'acier sur la base en % en masse),

(a) la microstructure comprend une structure bainitique et une microstructure restante plus dure que la bainite où la fraction bainitique a une surface de 80 % ou plus dans la totalité de la microstructure,
(b) lorsque la taille de grain cristallin de la bainite est déterminée sur la base du joint de grain de grand angle ayant une différence d'orientation entre des cristaux adjacents de 15° ou plus, une longueur moyenne des grains cristallins dans la direction de l'épaisseur de tôle est de 7 μm ou moins,
(c) un diamètre équivalent de cercle d'une microstructure restante plus dure est de 3 μm ou moins, et
(d) une différence de dureté entre la bainite et la microstructure restante plus dure (dureté de la microstructure restante plus dure - dureté de la bainite) est de 100 Hv ou plus, et
(A) le nombre de précipités contenant au moins l'un parmi Nb, Ti, et V ayant chacun un diamètre équivalent de cercle de 20 nm ou moins est de 100 N/μm² ou plus.

2. Tôle d'acier épaisse selon la revendication 1, dans laquelle la tôle comprend en outre au moins un élément choisi parmi, en % en masse, du Ca à plus de 0 % et 0,005 % ou moins, de l'Al à plus de 0 % et 0,10 % ou moins, et du N à plus de 0 % et 0,010 % ou moins.

3. Tôle d'acier épaisse selon la revendication 1 ou 2, dans laquelle
la microstructure satisfait les exigences (e) à (g) suivantes lors d'une observation pour une section transversale verticale parallèle à la direction de laminage au niveau d'une position de 1/4 pour l'épaisseur de tôle (position t/4) : dans laquelle

(e) la microstructure comprend une structure bainitique et une microstructure restante plus dure que la bainite, dans laquelle la fraction bainitique dans la microstructure entière a une surface de 80 % ou plus,
(f) lorsque le grain cristallin de la bainite a été déterminé sur la base d'un joint de grain de grand angle ayant une différence d'orientation entre des cristaux adjacents de 15° ou plus, la longueur moyenne du grain cristallin dans la direction de l'épaisseur de tôle est de 7 μm ou moins, et
(g) le diamètre équivalent de cercle de la microstructure restante plus dure est de 3 μm ou moins.

4. Procédé de production d'une tôle d'acier épaisse ayant d'excellentes propriétés à la fatigue dans lequel une pièce d'acier de la composition chimique selon la revendication 1 ou 2 est laminée à chaud dans les conditions suivantes
température de chauffage : 1 000 à 1 200 °C
tirage cumulé à l'étape de laminage à chaud total : 70 % ou plus
tirage cumulé pendant le laminage de finition qui est fixé dans une plage d'un point de transformation Ar$_3$ + 100 °C à un point de transformation Ar$_3$ : 30 % ou plus
vitesse de refroidissement moyenne à partir de l'achèvement du laminage de finition à 600 °C : 10°C/s ou moins.

5. Procédé de production d'une tôle d'acier épaisse selon la revendication 4, dans lequel la température d'arrêt de refroidissement est de 450 °C ou moins.

# FIG.1

6-φ6.2

R20

10

15

30

12

13 14

40

40

127

R30

3.0

4.0

R30

(Unit:mm)

# FIG.2

$2\text{-}\phi12.5^{+0.05}_{-0.00}$

R0.1

30°

60°

90°

5

2

27.5±0.5

60±0.5

15

50±0.25

12.5

62.5±0.5

12.5±0.2

(Unit:mm)

**EP 3 040 436 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009133965 A
- JP H1060575 B
- JP 2011195944 A
- JP 2009084643 A

**Non-patent literature cited in the description**

- **ABE et al.** *Iron and Steel,* 1984, 1459-1466